# EUROPEAN PATENT SPECIFICATION

(11) **EP 2 365 714 B1**
(45) Date of publication and mention of the grant of the patent: **04.06.2014**
(21) Application number: 10305234.6
(22) Date of filing: 08.03.2010
(51) Int. Cl.: H04W 48/20, H04W 48/16

(54) **Reselection of cells in a TDMA cellular network**
Neuauswahl von Zellen in einem zellularen TDMA-Netzwerk
Resélection de cellules dans un réseau cellulaire TDMA

(43) Date of publication of application: 14.09.2011
(73) Proprietor: ST-Ericsson SA, 1228 Plan-les-Ouates (CH)
(72) Inventor: Cardineau, Damien, 72000 Le Mans (FR); Le Ray, Erwan, 72100 Le Mans (FR)
(74) Representative: Cabinet Plasseraud

(56) References cited:
- WO-A1-2009/020874
- US-A1- 2006 160 541

## Description

### TECHNICAL FIELD

The present invention generally relates to the re-selection of cells, autonomously managed by a Mobile Set (MS) in idle mode, in Time Division Multiple Access (TDMA) cellular telecommunication networks.

### RELATED ART

The approaches described in this section could be pursued, but are not necessarily approaches that have been previously conceived or pursued. Therefore, unless otherwise indicated herein, the approaches described in this section are not prior art to the claims in this application and are not admitted to be prior art by inclusion in this section.

Public Land Mobile Networks are subdivided in cells, each served by a dedicated Base Station. Different situations lead a Mobile Set to determine which cells, amongst reachable ones, are suitable to provide a given service. This occurs for example when the Mobile Set is not in a dedicated mode, stated otherwise when a dedicated physical channel is not yet allocated by the network to the Mobile Set.

In the context of TDMA cellular networks and of a Mobile Set complying with specifications established by 3GPP (3rd Generation Partnership Project), criteria and methods for cell selecting or re-selecting when the Mobile Set is in idle and packet idle mode, also designated NC0 and NC1 modes, have been described in the technical specification 3GPP TS 45.008 - "Digital cellular telecommunications system (Phase 2+); Radio subsystem link control", more particularly in chapters 6.4 and 6.5.

According to this specification, cell reselection criteria that must fulfil a Mobile Set in idle and packet idle mode used for selecting and/or confirming a given cell are based on a path loss criterion, called C2 or C32 criterion, and on a Downlink Signalling Failure criterion.

The path loss criterion is computed from measurements of power levels obtained by the Mobile Set in measuring the power level observed on reception of paging blocks broadcasted on a specific channel, called Broadcast Control CHannel (BCCH). The Broadcast Control CHannel is emitted in each cell in order to broadcast control signals and information on said cell. If the power level of a given cell is lower than a predetermined threshold, then the cell is not considered as suitable to provide network services. However, it has been observed that, in particular in area where the density of cells is high, for example in business area of large cities, the path loss criterion is inefficient to disqualify cells on which the Mobile Set shall not be camped. The power level measured on the BCCH for a given cell can be high enough not to fulfil the path loss criterion, even if said cell is not actually capable of delivering an adequate Quality Of Service. When such a cell is selected based on the path loss criterion, the Mobile Set is prone to loss access to the network services.

The Downlink Signalling Failure criterion is computed from measurements of radio quality obtained by the Mobile Set in measuring the radio quality of the BCCH when decoding signalling information. The Downlink Signalling Failure criterion is an alarm, triggered when the Mobile Set is no more capable of decoding signalling information. When a downlink signalling failure is detected, the Mobile Set shall proceed immediately with a cell re-selection. However, it has been observed that, following the detection of the downlink signalling failure according to the requirements of the 3GPP standards, it is often too late to reselect immediately another suitable cell without loosing temporarily network services for the time needed by the Mobile Set to perform a new campaign of measurements.

Also, the power consumption in the Mobile Set may be significantly affected by these potential losses of services, because the process of testing various cells in the course of cell selection is power consuming.

The document US2006/0160541 discloses a method for cell reselection in a global system for mobile communication, the method including measuring reception powers and reception qualities of signals provided form a current serving cell and neighbouring cells.

The document W02009/020874 discloses techniques for performing cell reselection in a wireless communication system by identifying, for a user equipment initially camping on a first cell, second a third cells deemed to be better than the first cell.

Consequently, there is a need to provide a solution for a Mobile Set in an idle mode to reselect cells of a TDMA cellular network; said solution being adapted to prevent losses of services, in particular in dense urban areas.

### SUMMARY OF THE INVENTION

To address these needs, a first aspect of the present invention relates to a method for a Mobile Set to reselect a cell in a cellular network using Time Division Multiple Access as channel access method. The method comprises the following steps, carried out in the Mobile Set in an idle mode, while receiving signals emitted by a serving cell on which the Mobile Set is camped and by a plurality of surrounding cells:
- comparing, to a first threshold, a first Signal-to-Noise Ratio for signals emitted from said serving cell;
- if the first Signal-to-Noise Ratio is lower than the first threshold, identifying one of the surrounding cells emitting signals having a second Signal-to-Noise Ratio higher than a second threshold, said second threshold being higher than the first threshold;
- selecting said identified surrounding cell as new serving cell.

The method is intended to be implemented by Mobile Set evolving into cellular networks using TDMA. TDMA systems are particularly prone to interferences, contrary to Code Division Multiple Access (CDMA) systems for example, since a plurality of emitters shares a common frequency. This issue is particularly noticeable in areas where the density of emitters, belonging to one or more TDMA cellular networks, is high, for instance in a business area. From the point of view of the Mobile Set, the received signals from serving and surrounding cells, may be considered as high : however if the level of interferences is also high, it may prevent the Mobile Set to switch into a connected mode. In performing reselection based on measurements of Signal-to-Noise Ratio and not only on power level measurements, it is then possible to detect, as soon as possible, situations where a low level of radio quality could lead up to a non availability of network services on the Mobile Set.

Thanks to the method, cells with inappropriate level of interference will be excluded, even if they present a high power level. Consequently, it permits the Mobile Set to save time by not selecting cells which will not be able to provide services. Moreover the method limits power consumption losses, since useless trials to select other cells can be avoided.

The first Signal-to-Noise Ratio might be computed for the serving cell by averaging a plurality of measurements of Signal-to-Noise Ratios over a given period of time. The second Signal-to-Noise Ratio might be computed for each surrounding cells by averaging a plurality of measurements of Signal-to-Noise Ratios performed over a given period of time.

In an embodiment, the method comprises a step of receiving data to compute the first threshold, for instance through System Information, broadcasted by the cellular network. The method can also comprise a step of receiving data to compute the second threshold, for instance through System Information, broadcasted by the cellular network.

It allows the network to adapt implementations of the method, taking into consideration its infrastructure and its performances. Also, the behaviour of the method can be dynamically adapted. This gives even greater flexibility in the configuration and the deployment of the method.

In an embodiment, the second threshold can be computed by adding a value of hysteresis to the first Signal-to-Noise Ratio.

Consequently, only surrounding cells with a Signal-to-Noise Ratio higher than the first Signal-to-Noise Ratio of the serving cell might be chosen for reselection. Moreover, adding a value of hysteresis to the Signal-to-Noise Ratio allows improving the stability of reselections by preventing too quick and unreliable switches between cells.

A second aspect of the present invention relates to a computer program product comprising one or more stored sequences of instructions that are accessible to a processor and which, when executed by the processor, cause the processor to carry out the steps of the method of the first aspect of the present invention.

A third aspect of the present invention relates to a cell evaluation device for reselecting a cell in a cellular network using Time Division Multiple Access as channel access method. The cell evaluation device comprises:
- an output;
- a first comparator adapted, when the Mobile Set is in an idle mode while receiving signals emitted by a serving cell on which the Mobile Set is camped, to compare, to a first threshold, a first Signal-to-Noise Ratio for signals emitted from said serving cell;
- a second comparator (64) coupled to the first comparator (60) and to the output (66), said second comparator being adapted, when the Mobile Set is in an idle mode while receiving signals emitted by a plurality of surrounding cells, and if the first Signal-to-Noise Ratio is lower than the first threshold, to identify one of the surrounding cells emitting signals having a second Signal-to-Noise Ratio higher than a second threshold, said second threshold being higher than the first threshold, the second comparator (64) being configured to deliver to the output (66) an information indicating one identified surrounding cells that should be reselected as new serving cell.

In one embodiment, the cell evaluation device comprises processing units adapted to compute:
- the first Signal-to-Noise Ratio for the serving cell by averaging a plurality of measurements of Signal-to-Noise Ratios over a given period of time;
- the second Signal-to-Noise Ratio, for each surrounding cells, by averaging a plurality of measurements of Signal-to-Noise Ratios performed over a given period of time.

The first comparator might be configured to receive data to compute the first threshold. The second comparator might be configured to receive data to compute the second threshold.

A fourth aspect relates to a Mobile Set comprising an antenna coupled to a radio processing unit implementing a network stack to connect to a cellular network comprising a plurality of cells and using Time Division Multiple Access as channel access method. The radio processing unit comprises:
- a measuring module to carry out measurements of a first Signal-to-Noise Ratio for a serving cell and a second Signal-to-Noise Ratio for each surrounding cells;
- a cell evaluation device, according to the third aspect, coupled to the measuring module to receive the first Signal-to-Noise Ratio for a serving cell and the second Signal-to-Noise Ratio for each surrounding cells.

A fifth aspect relates to a cellular network using Time Division Multiple Access as channel access method comprising a plurality of cells and at least one Mobile Set according to the fourth aspect.

### BRIEF DESCRIPTION OF THE DRAWINGS

The present invention is illustrated by way of example, and not by way of limitation, in the figures of the accompanying drawings, in which like reference numerals refer to similar elements and in which:
- Figure 1 is a schematic view of a TDMA cellular telecommunication networks comprising a plurality of cells and a Mobile Set;
- Figure 2 is a schematic block diagram of a cell evaluation device;
- Figure 3 is a schematic block diagram of a Mobile Set;
- Figure 4 is a flow chart illustrating steps of a method of reselecting a cell in a TDMA cellular network.

### DESCRIPTION OF PREFERRED EMBODIMENTS

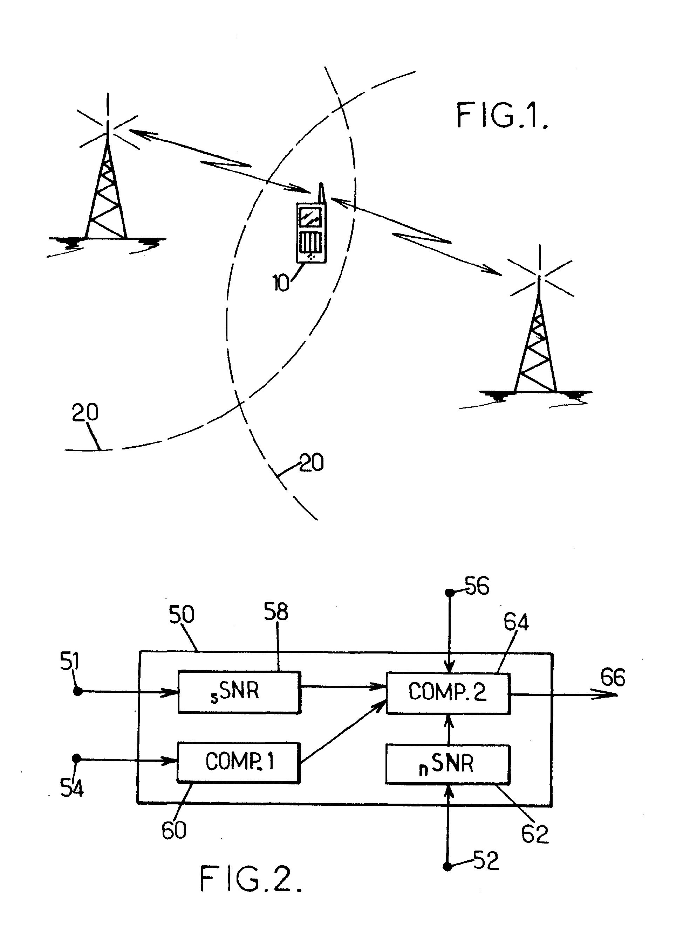

Referring to Figure 1, there is shown therein a schematic view of a TDMA cellular telecommunication networks comprising a plurality of cells 20, each served by a dedicated base station, and a Mobile Set 10 capable of using at least a subset of resources provided by said network. The network comprises a plurality of cells like cells 20. Depending on its geographical position, the Mobile Set 10 may simultaneously receive signals emitted by a plurality of surrounding cells. The Mobile Set 10 is camped on a serving cell. The surrounding cells may be discovered by the Mobile Set 10 upon reception of a list sent by the serving cell. The surrounding cells may also be discovered by the Mobile Set 10 by listening and/or probing specific frequency bands on which cells are able to emit. When the Mobile Set is not in dedicated mode, or stated otherwise when the Mobile Set is in idle and packet idle mode, the Mobile Set has to check periodically if the current serving cell and the surrounding cells are capable of providing a sufficient quality of service. If the current serving cell is no longer considered as suitable, the Mobile Set 10 may decide to select one of the surrounding cell if the latter is capable of providing the expected Quality of Service.

In the description above, it will be understood that the cellular network and the Mobile Set are generally compliant with the technical specifications of Global System for Mobile Communications (GSM). The channel access method used by the cellular network is Time Division Multiple Access. In the cellular network, data transmission is subdivided into multiframes, each comprising a plurality of frames. Each frame is further divided into time slots. Dedicated time slots are used for control channels. The control channels comprise notably a broadcast control channel (BCCH) to broadcast system information, and a common control channel (CCCH) used in particular to support a paging channel (PCH). The PCH is used to deliver paging messages. Groups of frames, called Radio block are reserved in each multiframe. A paging block is a CCCH radio block used for the PCH. Paging blocks are intended to broadcast paging message. A BBCH block is a radio block dedicated to BCCH, intended to broadcast system information.

In particular, the embodiments of the invention described hereinafter may be of a particular interest to improve the procedures for cell selection as proposed by the technical specification 3GPP TS 45.008 entitled "Digital cellular telecommunications system (Phase 2+); Radio subsystem link control", and more particularly in chapters 6.4 and 6.5.

The Mobile Set can select or reselect, i.e., confirm a given cell, based on measurements of a Signal-to-Noise Ratio (SNR).

A Signal-to-Noise Ratio sSNR for the serving cell can be measured in measuring the signal-to-noise ratio of paging blocks received from the serving cell. The Signal-to-Noise Ratio sSNR is a measurement expressing in decibels (dB) the quality of the received signal emitted across the cell.

A Signal-to-Noise Ratio nSNR for each one of the surrounding cells can be computed by measuring the signal-to-noise ratio on BCCH blocks. The Signal-to-Noise Ratio nSNR is a measurement expressing in decibels (dB) the quality of the received signal emitted across each one of the surrounding cells.

Referring now to Figure 2, there is shown therein a schematic block diagram of a cell evaluation device 50 according to an embodiment.

The cell evaluation device 50 comprises a first input 51 to receive measurements of the Signal-to-Noise Ratio sSNR for the serving cell. The cell evaluation device may comprise a first processing unit 58 coupled to the first input 51 adapted to compute and to output an average Signal-to-Noise Ratio sSNR for the serving cell. The first processing unit 58 is notably conceived to limit the influence of non representative fluctuations of the Signal-to-Noise Ratio sSNR measurements. For instance, the first processing unit can average the measurements, received on the first input over a given period of time, of the Signal-to-Noise Ratio sSNR for the serving cell. The first processing unit 58 could also implement other statistical processing, for example median or Gaussian calculations or singularities deletion.

The cell evaluation device 50 also comprises a first comparator 60 adapted to determine if the average Signal-to-Noise Ratio sSNR for the serving cell is lower than a reselect threshold RST, and to output the result of this comparison.

In one embodiment, the cell evaluation device 50 comprises a second input 54 to receive the reselect threshold RST. The first comparator 60 is then coupled to the second input 54. The TDMA cell network might broadcast in the form of System Information, for instance in the System Information 3, the value of the reselect threshold RST, the first comparator 60 being then capable of taking into account the reselect threshold RST as diffused by the network.

Alternatively, the reselect threshold RST may be hardcoded in the cell evaluation device 50 or in the first comparator 60.

The cell evaluation device 50 comprises a second input 52 to receive measurements of the Signal-to-Noise Ratio nSNR for each one of the surrounding cells. The cell evaluation device may comprise a second processing unit 62 coupled to the second input 52 adapted to compute and to output an average Signal-to-Noise Ratio nSNR for each one of the surrounding cell. The second processing unit 62 is notably conceived to limit the influence of non representative fluctuations of the Signal-to-Noise Ratio nSNR measurements. For instance, the second processing unit can average the measurements, received on the first input over a given period of time, of the Signal-to-Noise Ratio nSNR for each one of the surrounding cell. The second processing unit 58 could also implement other statistical processing, for example median or Gaussian calculations or singularities deletion.

The cell evaluation device 50 also comprises a second comparator 60 coupled to the output of the first comparator 60, and to the output of the second processing unit 62. The second comparator 64 is adapted to determine whether the average Signal-to-Noise Ratio nSNR of at least one of the surrounding cell is higher than a reselect hysteresis threshold RSHYT, only if the average Signal-to-Noise Ratio sSNR for the serving cell is lower than the reselect threshold RST.

If the average Signal-to-Noise Ratio sSNR for the serving cell is lower than the reselect threshold RST and if the average Signal-to-Noise Ratio nSNR of at least one of the surrounding cells is higher than a reselect hysteresis threshold RSHYT, the second comparator is configured to deliver to an output 66 an information indicating that said at least one of the surrounding cell should be reselected. Otherwise, the second comparator is configured to deliver to the output 66 information indicating that no reselection should be undertaken.

In an embodiment, the second comparator 60 is coupled to the output of the first comparator 60 to receive the average Signal-to-Noise Ratio sSNR for the serving cell. The second comparator 60 is then arranged to compute the reselect hysteresis threshold RSHYT by adding a value of hysteresis HY to the average Signal-to-Noise Ratio sSNR received from the first comparator 60. Consequently, only surrounding cells with an average Signal-to-Noise Ratio nSNR higher than the average Signal-to-Noise Ratio sSNR of the serving cell might be chosen for reselection. Moreover, adding a value of hysteresis HY to the average Signal-to-Noise Ratio sSNR allows to improve the stability of reselections by preventing too rapid and sensitive switching between cells.

In an embodiment, the cell evaluation device 50 comprises a third input 56 to receive the reselect hysteresis threshold RSHYT or the hysteresis HY. The second comparator 64 is then coupled to the third input 56. The TDMA cell network might broadcast in the form of System Information, for instance in the System Information 3, the value of the reselect hysteresis threshold RSHYT or the hysteresis HY, the second comparator 64 being then capable of taking into account the reselect hysteresis threshold RSHYT or the hysteresis HY as diffused by the network.

Alternatively, the reselect hysteresis threshold RSHYT or the hysteresis HY may be hardcoded in the cell evaluation device 50 or in the second comparator 64.

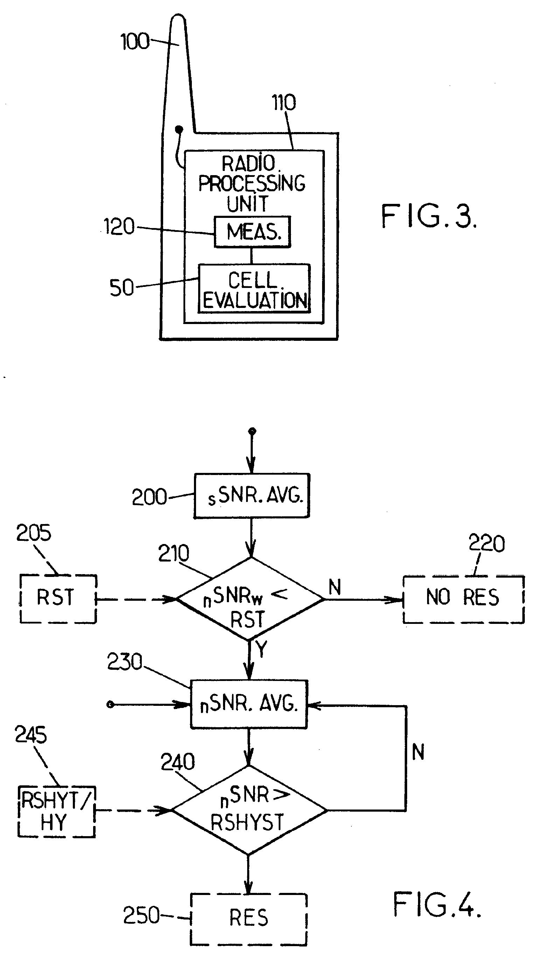

Referring now to Figure 3, there is shown therein a schematic block diagram of a Mobile Set according to an embodiment.

The Mobile Set 100 comprises an antenna 100 coupled to a radio processing unit 110 implementing a network stack. The Mobile Set is able to interact with the TDMA cellular network, and in particular to receive via its antenna paging blocks and BCCH blocks, received from cells of said network. The radio processing unit 110 comprises itself a measuring module 120 to carry out measurements on the paging blocks and BCCH blocks, notably measurements of Signal-to-Noise Ratio. More particularly, the radio processing unit 110 is capable of measuring, at a given moment, the Signal-to-Noise Ratio sSNR for the serving cell and the Signal-to-Noise Ratio nSNR for each one of the surrounding cells. The radio processing unit 110 comprises the cell evaluation device 50. The cell suitability evaluation device 50 is coupled to the measuring module 120 so as to receive the Signal-to-Noise Ratio sSNR for the serving cell and the Signal-to-Noise Ratio nSNR for each one of the surrounding cells. The cell evaluation device 50 may also be coupled to the radio processing unit 110 to receive the reselect threshold RST. The cell evaluation device 50 may also be coupled to the radio processing unit 110 to receive the reselect hysteresis threshold RSHYT or alternatively the hysteresis HY. The radio processing unit 110, the measuring module 120 and the cell evaluation device 50 can be implemented in hardware, software, or a combination of hardware and software. Any processor, controller, or other apparatus adapted for carrying out the functionality described herein is suitable. A typical combination of hardware and software could include a general purpose microprocessor (or controller) with a computer program that, when loaded and executed, carries out the functionality described herein.

A method of reselecting a cell in a TDMA cellular network will now be described in view of Figure 4.

The method may comprise a step 200 of computing for the serving cell an average Signal-to-Noise Ratio sSNR for a given period of time, from a plurality of measurements of the Signal-to-Noise Ratio sSNR for the serving cell, received in input.

The method may also comprise an optional step 205 of receiving data to compute a reselect threshold RST. For instance, said data may be received from the TDMA cellular network in the form of System Information, in particular in the System Information 3. The reselect threshold RST may be a parameter of the method, for example initialized during a phase of setup.

The method comprises a step 210 of comparing the Signal-to-Noise Ratio sSNR for the serving cell to a reselect threshold RST. If the average Signal-to-Noise Ratio sSNR for the serving cell is lower than the reselect threshold RST, no reselection is performed. Alternatively, the Signal-to-Noise Ratio sSNR for the serving cell may be used instead of the average Signal-to-Noise Ratio sSNR for the serving cell.

If the average Signal-to-Noise Ratio sSNR for the serving cell is lower than the reselect threshold RST, then, in a step 240, a search for at least one of the surrounding cells having an average Signal-to-Noise Ratio higher than a reselect hysteresis threshold RSHYT is performed. The reselect hysteresis threshold RSHYT is equal or higher than the reselect threshold RST. In particular, during the step 240, for each one of the surrounding cells, the average Signal-to-Noise Ratio nSNR is compared to the reselect hysteresis threshold RSHYT. The average Signal-to-Noise Ratio nSNR for each one of the surrounding cells might be computed in a step 230 from a plurality of measurements of the Signal-to-Noise Ratio nSNR, received in input. If the average Signal-to-Noise Ratio nSNR of at least one of the surrounding cells is higher than to the reselect hysteresis threshold RSHYT, then said at least one cell is declared to be suitable for reselection. In particular, said at least one cell might be reselect instead of the current serving cell in a step 250, so as the Mobile Set to be camped on said at least one cell said.

Alternatively, in the step 240, a Signal-to-Noise Ratio nSNR based on a single measurement, for each surrounding cell is compared to a reselect hysteresis threshold RSHYT, instead of the average Signal-to-Noise Ratio nSNR.

In an embodiment, during the step 240, the reselect hysteresis threshold RSHYT is computed by adding a value of hysteresis HY to the average Signal-to-Noise Ratio sSNR computed during the step 200, or to the Signal-to-Noise Ratio sSNR.

The data necessary to determine the reselect hysteresis threshold RSHYT or the hysteresis HY may be received in an optional step 245. For instance, said data may be received from the TDMA cellular network in the form of System Information, in particular in the System Information 3. The reselect hysteresis threshold RSHYT may be a parameter of the method, for example initialized during a phase of setup.

The present invention can also be embedded in a computer program product, which comprises all the features enabling the implementation of the methods described herein, and which - when loaded in an information processing system - is able to carry out these methods. Computer program means or computer program in the present context mean any expression, in any language, code or notation, of a set of instructions intended to cause a system having an information processing capability to perform a particular function either directly or after either or both of the following a) conversion to another language. Such a computer program can be stored on a computer or machine readable medium allowing data, instructions, messages or message packets, and other machine readable information to be read from the medium. The computer or machine readable medium may include non-volatile memory, such as ROM, Flash memory, Disk drive memory, CD-ROM, and other permanent storage. Additionally, a computer or machine readable medium may include, for example, volatile storage such as RAM, buffers, cache memory, and network circuits. Furthermore, the computer or machine readable medium may comprise computer or machine readable information in a transitory state medium such as a network link and/or a network interface, including a wired network or a wireless network, that allow a device to read such computer or machine readable information.

Expressions such as "comprise", "include", "incorporate", "contain", "is" and "have" are to be construed in a non-exclusive manner when interpreting the description and its associated claims, namely construed to allow for other items or components which are not explicitly defined also to be present. Reference to the singular is also to be construed in be a reference to the plural and vice versa.

While there has been illustrated and described what are presently considered to be the preferred embodiments of the present invention, it will be understood by those skilled in the art that various other modifications may be made, and equivalents may be substituted, without departing from the true scope of the present invention. Additionally, many modifications may be made to adapt a particular situation to the teachings of the present invention without departing from the central inventive concept described herein. Furthermore, an embodiment of the present invention may not include all of the features described above. Therefore, it is intended that the present invention not be limited to the particular embodiments disclosed, but that the invention include all embodiments falling within the scope of the appended claims.

A person skilled in the art will readily appreciate that various parameters disclosed in the description may be modified and that various embodiments disclosed and/or claimed may be combined without departing from the scope of the invention.

It is stipulated that the reference signs in the claims do not limit the scope of the claims, but are merely inserted to enhance the legibility of the claims.

## Claims

1. Method for a Mobile Set to reselect a cell in a cellular network using Time Division Multiple Access as channel access method, **characterized in that** the method comprises the following steps, carried out in the Mobile Set in an idle mode, while receiving signals emitted by a serving cell on which the Mobile Set is camped and by a plurality of surrounding cells:
• comparing (210), to a first threshold, a first Signal-to-Noise Ratio for signals emitted from said serving cell;
• if the first Signal-to-Noise Ratio is lower than the first threshold, identifying (240) one of the surrounding cells emitting signals having a second Signal-to-Noise Ratio higher than a second threshold, said second threshold being higher than the first threshold;
• selecting (250) said identified surrounding cell as new serving cell.

2. Method according to claim 1, wherein the first Signal-to-Noise Ratio is computed for the serving cell by averaging a plurality of measurements of Signal-to-Noise Ratios over a given period of time.

3. Method according to claim 1 or 2, wherein the second Signal-to-Noise Ratio is computed for each surrounding cells by averaging a plurality of measurements of Signal-to-Noise Ratios performed over a given period of time.

4. Method according to any one of claims 1 to 3, further comprising a step (205) of receiving data to compute the first threshold.

5. Method according to claim 4, wherein the data to compute the first threshold are received through System Information, broadcasted by the cellular network.

6. Method according to any one of claims 1 to 5, further comprising a step (245) of receiving data to compute the second threshold.

7. Method according to claim 6, wherein the data to compute the second threshold are received through System Information, broadcasted by the cellular network.

8. Method according to claim 6 or 7, wherein the second threshold is computed by adding a value of hysteresis to the first Signal-to-Noise Ratio.

9. A computer program product comprising one or more stored sequences of instructions that are accessible to a processor and which, when executed by the processor, cause the processor to carry out all the steps of any one of Claims 1 to 8.

10. Cell evaluation device (50) for cell reselection adapted to be coupled to a Mobile Set of a cellular network using Time Division Multiple Access as channel access method, **characterized in that**, the cell evaluation device comprises:
• an output (66);
• a first comparator (60) adapted, when the Mobile Set is in an idle mode while receiving signals emitted by a serving cell on which the Mobile Set is camped, to compare, to a first threshold, a first Signal-to-Noise Ratio for signals emitted from said serving cell;
• a second comparator (64) coupled to the first comparator (60) and to the output (66), said second comparator being adapted, when the Mobile Set is in an idle mode while receiving signals emitted by a plurality of surrounding cells, and if the first Signal-to-Noise Ratio is lower than the first threshold, to identify one of the surrounding cells emitting signals having a second Signal-to-Noise Ratio higher than a second threshold, said second threshold being higher than the first threshold, the second comparator (64) being configured to deliver to the output (66) an information indicating one identified surrounding cells that should be reselected as new serving cell.

11. Cell evaluation device (50) according to claim 10, further comprising processing units (58, 64) adapted to compute:
• the first Signal-to-Noise Ratio for the serving cell by averaging from a plurality of measurements of Signal-to-Noise Ratios over a given period of time;
• the second Signal-to-Noise Ratio, for each surrounding cells, by averaging a plurality of measurements of Signal-to-Noise Ratios performed over a given period of time.

12. Cell evaluation device (50) according to claim 10 or 11, wherein the comparator (60) is configured to receive data to compute the first threshold.

13. Cell evaluation device (50) according to any one of claims 10 to 12, wherein the second comparator (64) is configured to receive receiving data to compute the second threshold.

14. Mobile Set comprising an antenna (100) coupled to a radio processing unit (110) implementing a network stack to connect to a cellular network comprising a plurality of cells and using Time Division Multiple Access as channel access method, wherein the radio processing unit (110) comprises:
• a measuring module (120) to carry out measurements of a first Signal-to-Noise Ratio for a serving cell and a second Signal-to-Noise Ratio Signal-to-Noise Ratio for each surrounding cells;
• a cell evaluation device (50), according to any of Claims 10-13, coupled to the measuring module (120) to receive the first Signal-to-Noise Ratio for a serving cell and the second Signal-to-Noise Ratio for each surrounding cells.

15. Cellular network using Time Division Multiple Access as channel access method comprising a plurality of cells and at least one Mobile Set according to Claim 14.

## Patentansprüche

1. Verfahren für ein mobiles Gerät zur Neuauswahl einer Zelle in einem zellularen Netzwerk, das Time Division Multiple Access als Kanalzugriffsverfahren verwendet, **dadurch gekennzeichnet, dass** das Verfahren die folgenden Schritte aufweist, die in dem mobilen Gerät in einem Leerlaufmodus ausgeführt werden, während es Signale empfängt, die von einer bedienenden Zelle, auf der das mobile Gerät campiert, und von einer Vielzahl umgebender Zellen ausgegeben werden:
• Vergleichen (210) eines ersten Signal-Rausch-Verhältnisses für von der besagten bedienenden Zelle ausgegebene Signale mit einer ersten Schwelle;
• falls das erste Signal-Rausch-Verhältnis niedriger als die erste Schwelle ist, Identifizieren (240) einer der umgebenden Zellen, die Signale emittiert, die ein zweites Signal-Rausch-Verhältnis aufweisen, das höher als eine zweite Schwelle ist, wobei die besagte zweite Schwelle höher als die erste Schwelle ist;
• Auswählen (250) der besagten identifizierten umgebenden Zelle als neue bedienende Zelle.

2. Verfahren nach Anspruch 1, wobei das erste Signal-Rausch-Verhältnis für die bedienende Zelle durch Mittelung einer Vielzahl von Messungen von Signal-Rausch-Verhältnissen während eines gegebenen Zeitraums berechnet wird.

3. Verfahren nach Anspruch 1 oder 2, wobei das zweite Signal-Rausch-Verhältnis für jede umgebende Zelle durch Mitteln einer Vielzahl von Messungen von Signal-Rausch-Verhältnissen, die während eines gegebenen Zeitraums durchgeführt werden, berechnet wird.

4. Verfahren nach einem der Ansprüche 1 bis 3, weiterhin aufweisend einen Schritt (205) des Erhaltens von Daten zur Berechnung der ersten Schwelle.

5. Verfahren nach Anspruch 4, wobei die Daten zur Berechnung der ersten Schwelle durch vom zellularen Netzwerk gesendete Systeminformationen erhalten werden.

6. Verfahren nach einem der Ansprüche 1 bis 5, weiterhin aufweisend einen Schritt (245) des Erhaltens von Daten zur Berechnung der zweiten Schwelle.

7. Verfahren nach Anspruch 6, wobei die Daten zur Berechnung der zweiten Schwelle durch vom zellularen Netzwerk gesendete Systeminformationen erhalten werden.

8. Verfahren nach Anspruch 6 oder 7, wobei die zweite Schwelle durch Hinzufügen eines Hysteresewerts zum ersten Signal-Rausch-Verhältnis berechnet wird.

9. Computerprogrammprodukt, aufweisend eine oder mehrere gespeicherte Folge/n von Befehlen, die für einen Prozessor zugänglich sind und die bei Ausführung durch den Prozessor den Prozessor veranlassen, alle Schritte nach einem der Ansprüche 1 bis 8 auszuführen.

10. Zellbewertungsvorrichtung (50) zur Neuauswahl von Zellen, die angepasst ist, mit einem mobilen Gerät eines zellularen Netzwerks, das Time Division Multiple Access als Kanalzugriffsverfahren verwendet, gekoppelt zu werden, **dadurch gekennzeichnet, dass** die Zellbewertungsvorrichtung aufweist:
• einen Ausgang (66);
• einen ersten Komparator (60), der angepasst ist, um, wenn sich das mobile Gerät während des Empfangs von Signalen, die von einer bedienenden Zelle, auf der das mobile Gerät campiert, ausgegeben werden, in einem Leerlaufmodus befindet, ein erstes Signal-Rausch-Verhältnis für von der besagten bedienenden Zelle ausgegebene Signale mit einer ersten Schwelle zu vergleichen;
• einen zweiten Komparator (64), der mit dem ersten Komparator (60) und mit dem Ausgang (66) gekoppelt ist, wobei der besagte zweite Komparator angepasst ist, um, wenn sich das mobile Gerät während des Empfangs von Signalen, die von einer Vielzahl umgebender Zellen ausgegeben werden, in einem Leerlaufmodus befindet, und wenn das erste Signal-Rausch-Verhältnis niedriger als die erste Schwelle ist, eine der umgebenden Zellen zu identifizieren, die Signale ausgibt, die ein zweites Signal-Rausch-Verhältnis aufweisen, das höher als eine zweite Schwelle ist, wobei die besagte zweite Schwelle höher als die erste Schwelle ist, wobei der zweite Komparator (64) konfiguriert ist, um dem Ausgang (66) Informationen zu übermitteln, die eine identifizierte umgebende Zelle angeben, die als neue bedienende Zelle ausgewählt werden soll.

11. Zellbewertungsvorrichtung (50) nach Anspruch 10, weiterhin aufweisend Verarbeitungseinheiten (58, 64), die angepasst sind, um Folgendes zu berechnen:
• das erste Signal-Rausch-Verhältnis für die bedienende Zelle durch Ermitteln des Mittelwerts aus einer Vielzahl von Messungen von Signal-Rausch-Verhältnissen während eine gegebenen Zeitraums;
• das zweite Signal-Rausch-Verhältnis für jede umgebende Zelle durch Mittelung einer Vielzahl von Messungen von Signal-Rausch-Verhältnissen, die während eines gegebenen Zeitraums durchgeführt werden.

12. Zellbewertungsvorrichtung (50) nach Anspruch 10 oder 11, wobei der Komparator (60) konfiguriert ist, um Daten zur Berechnung der ersten Schwelle zu erhalten.

13. Zellbewertungsvorrichtung (50) nach einem der Ansprüche 10 bis 12, wobei der zweite Komparator (64) konfiguriert ist, Empfangsdaten zur Berechnung der zweiten Schwelle zu erhalten.

14. Mobiles Gerät, aufweisend eine Antenne (100), die mit einer Funkverarbeitungseinheit (110) gekoppelt ist, die einen Netzwerkstapel zur Verbindung mit einem zellularen Netzwerk, das eine Vielzahl von Zellen aufweist und Time Division Multiple Access als Kanalzugriffsverfahren verwendet, implementiert, wobei die Funkverarbeitungsarbeit (110) aufweist:
• ein Messmodul (120) zur Ausführung von Messungen eines ersten Signal-Rausch-Verhältnisses für eine bedienende Zelle und eines zweiten Signal-Rausch-Verhältnisses für jede umgebende Zelle;
• eine Zellbewertungsvorrichtung (50) nach einem der Ansprüche 10-13, die mit dem Messmodul (120) gekoppelt ist, zum Erhalten des ersten Signal-Rausch-Verhältnisses für eine bedienende Zelle und des zweiten Signal-Rausch-Verhältnisses für jede umgebende Zelle.

15. Zellulares Netzwerk, das Time Division Multiple Access (Mehrfachzugriff im Zeitmultiplex) als Kanalzugriffsverfahren verwendet, aufweisend eine Vielzahl von Zellen und zumindest ein mobiles Gerät nach Anspruch 14.

## Revendications

1. Procédé de resélection par un poste mobile d'une cellule dans un réseau cellulaire en utilisant un accès multiple par répartition dans le temps en tant que méthode d'accès au canal, **caractérisé en ce que** le procédé comprend les étapes suivantes, effectuées dans le poste mobile dans un mode de veille, tout en recevant des signaux émis par une cellule de desserte sur laquelle se trouve le poste mobile et par une pluralité de cellules environnantes ;
- la comparaison (210) d'un premier rapport de signal sur bruit pour des signaux émis à partir de ladite cellule de desserte à un premier seuil ;
- si le premier rapport de signal sur bruit est inférieur au premier seuil, l'identification (240) de l'une des cellules environnantes émettant des signaux ayant un deuxième rapport de signal sur bruit supérieur à un deuxième seuil, ledit deuxième seuil étant supérieur au premier seuil ;
- la sélection (250) de ladite cellule environnante identifiée en tant que nouvelle cellule de desserte.

2. Procédé selon la revendication 1, dans lequel le premier rapport de signal sur bruit est calculé pour la cellule de desserte en calculant la moyenne d'une pluralité de mesures de rapports de signal sur bruit au cours d'une période de temps donnée.

3. Procédé selon la revendication 1 ou 2, dans lequel le deuxième rapport de signal sur bruit est calculé pour chaque cellule environnante en calculant la moyenne d'une pluralité de mesures de rapports de signal sur bruit effectuées au cours d'une période de temps donnée.

4. Procédé selon l'une quelconque des revendications 1 à 3, comprenant en outre une étape (205) de réception de données pour calculer le premier seuil.

5. Procédé selon la revendication 4, dans lequel les données pour calculer le premier seuil sont reçues par l'intermédiaire d'informations de système diffusées par le réseau cellulaire.

6. Procédé selon l'une quelconque des revendications 1 à 5, comprenant en outre une étape (245) de réception de données pour calculer le deuxième seuil.

7. Procédé selon la revendication 6, dans lequel les données pour calculer le deuxième seuil sont reçues par l'intermédiaire d'informations de système diffusées par le réseau cellulaire.

8. Procédé selon la revendication 6 ou 7, dans lequel le deuxième seuil est calculé en ajoutant une valeur d'hystérèse au premier rapport de signal sur bruit.

9. Produit de programme informatique comprenant une ou plusieurs séquences d'instructions mémorisées auxquelles un processeur peut accéder et qui, lorsqu'elles sont exécutées par le processeur, amènent le processeur à effectuer toutes les étapes selon l'une quelconque des revendications 1 à 8.

10. Dispositif d'évaluation de cellules (50) pour une resélection de cellule adapté pour être couplé à un poste mobile d'un réseau cellulaire en utilisant un accès multiple par répartition dans le temps en tant que méthode d'accès au canal, **caractérisé en ce que** le dispositif d'évaluation de cellules comprend :
- une sortie (66) ;
- un premier comparateur (60) adapté pour, lorsque le poste mobile est dans un mode de veille en recevant des signaux émis par une cellule de desserte sur laquelle se trouve le poste mobile, comparer un premier rapport de signal sur bruit pour des signaux émis à partir de ladite cellule de desserte à un premier seuil ;
- un deuxième comparateur (64) couplé au premier comparateur (60) et à la sortie (66), ledit deuxième comparateur étant adapté pour, lorsque le poste mobile est dans un mode de veille en recevant des signaux émis par une pluralité de cellules environnantes, et si le premier rapport de signal sur bruit est inférieur au premier seuil, identifier l'une des cellules environnantes émettant des signaux ayant un deuxième rapport de signal sur bruit supérieur à un deuxième seuil, ledit deuxième seuil étant supérieur au premier seuil, le deuxième comparateur (64) étant configuré pour délivrer à la sortie (66) une information indiquant une cellule environnante identifiée qui doit être resélectionnée en tant que nouvelle cellule de desserte.

11. Dispositif d'évaluation de cellules (50) selon la revendication 10, comprenant en outre des unités de traitement (58, 64) adaptées pour calculer :
- le premier rapport de signal sur bruit pour la cellule de desserte en calculant la moyenne d'une pluralité de mesures de rapports de signal sur bruit au cours d'une période de temps donnée ;
- le deuxième rapport de signal sur bruit, pour chaque cellule environnante, en calculant la moyenne d'une pluralité de mesures de rapports de signal sur bruit effectuées au cours d'une période de temps donnée.

12. Dispositif d'évaluation de cellules (50) selon la revendication 10 ou 11, dans lequel le comparateur (60) est configuré pour recevoir des données pour calculer le premier seuil.

13. Dispositif d'évaluation de cellules (50) selon l'une quelconque des revendications 10 à 12, dans lequel le deuxième comparateur (64) est configuré pour recevoir des données pour calculer le deuxième seuil.

14. Poste mobile comprenant une antenne (100) couplée à une unité de traitement radio (110) mettant en oeuvre un empilement de réseau pour se connecter à un réseau cellulaire comprenant une pluralité de cellules et utilisant un accès multiple par répartition dans le temps en tant que méthode d'accès au canal, dans lequel l'unité de traitement radio (110) comprend :
- un module de mesure (120) pour effectuer des mesures d'un premier rapport de signal sur bruit pour une cellule de desserte et d'un deuxième rapport de signal sur bruit pour chaque cellule environnante ;
- un dispositif d'évaluation de cellules (50) selon l'une quelconque des revendications 10 à 13, couplé au module de mesure (120) pour recevoir le premier rapport de signal sur bruit pour une cellule de desserte et le deuxième rapport de signal sur bruit pour chaque cellule environnante.

15. Réseau cellulaire utilisant un accès multiple par répartition dans le temps en tant que méthode d'accès au canal, comprenant une pluralité de cellules et au moins un poste mobile selon la revendication 14.
